(19) Europäisches Patentamt
European Patent Office
Office européen des brevets

(11) **EP 3 283 968 B1**

(12) **FASCICULE DE BREVET EUROPEEN**

(45) Date de publication et mention
de la délivrance du brevet:
**20.03.2019 Bulletin 2019/12**

(21) Numéro de dépôt: **16730870.9**

(22) Date de dépôt: **07.04.2016**

(51) Int Cl.:
*G06F 12/14* *(2006.01)*  *G06F 21/64* *(2013.01)*
*G06F 21/74* *(2013.01)*  *G06F 21/79* *(2013.01)*

(86) Numéro de dépôt international:
**PCT/FR2016/050801**

(87) Numéro de publication internationale:
**WO 2016/166450 (20.10.2016 Gazette 2016/42)**

(54) **PROCÉDÉ DE PARTAGE D'UNE MÉMOIRE ENTRE AU MOINS DEUX ENTITÉS FONCTIONNELLES**

VERFAHREN ZUR GEMEINSAMEN NUTZUNG EINES SPEICHERS ZWISCHEN MINDESTENS ZWEI FUNKTIONELLE EINHEITEN

METHOD FOR SHARING A MEMORY BETWEEN AT LEAST TWO FUNCTIONAL ENTITIES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.04.2015 FR 1553369**

(43) Date de publication de la demande:
**21.02.2018 Bulletin 2018/08**

(73) Titulaire: **Inside Secure**
**13590 Meyreuil (FR)**

(72) Inventeurs:
• **DUPAQUIS, Vincent**
**13120 Biver (FR)**
• **GODZINSKI, Stéphane**
**13790 Peynier (FR)**

(74) Mandataire: **Marchand, André et al**
**OMNIPAT**
**24 Place des Martyrs de la Résistance**
**13100 Aix-en-Provence (FR)**

(56) Documents cités:
**FR-A1- 2 989 801**

**Description**

La présente invention concerne un procédé de partage d'une mémoire dans un dispositif comprenant au moins une mémoire et au moins deux entités fonctionnelles agencées sur un même support ou dans un même boîtier, une première entité fonctionnelle étant configurée pour écrire et lire des données dans au moins une première zone de la mémoire et une deuxième entité fonctionnelle configurée pour écrire et lire des données dans au moins une deuxième zone de la mémoire,

La publication FR2989801 A1 döcrit un procédé de protection d'une mémoire partagée par au moins deux processeurs avec un premier processeur destiné à l'exécution d'une application sécurisée et un deuxième processeur dédié à l'exécution d'une application non sécurisée. Les droits d'accès imposés par l'unité de protection de mémoire (MPU) du processeur P2 est verrouillé alors que l'application sécurisée est exécutée de sorte d'éviter l'application non sécurisée de P2 de corrompre l'espace mémoire de l'application sécurisée.

Le partage d'une mémoire dans un dispositif du type précité pose divers problèmes lorsqu'un certain degré de sécurité est recherché quant aux données stockées dans la mémoire. Du fait que leurs éléments constitutifs soient agencés sur le même support ou, à tout le moins, dans un même boîtier, et soient donc accessibles physiquement, de tels dispositifs sont susceptibles d'être attaqués par des fraudeurs qui peuvent essayer de prendre le contrôle d'une entité fonctionnelle pour accéder à la zone mémoire attribuée à une autre entité fonctionnelle. Outre le risque de prise de contrôle, un autre type d'attaque connu est l'injection d'erreur, par exemple au moyen d'un faisceau laser, permettant à un fraudeur de lire des données dans une zone mémoire déterminée ou d'y corrompre des données.

Pour pallier ce type d'attaque, on a développé des Unités de Protection Mémoire dites MPU ("Memory Protection Unit") qui effectuent un certain nombre de contrôles et vérifient qu'une entité déterminée est bien habilitée à écrire ou lire des données dans telle ou telle zone de la mémoire. Par exemple, les processeurs ARM® Cortex™-M3 sont équipés d'une unité MPU programmable dans laquelle on déclare des régions de l'espace mémoire, leurs propriétés (accessibilité en lecture ou lecture/écriture, privilèges, type de zone mémoire : partageable, tampon, cache, etc.) et les droits d'accès qui y sont associés.

Toutefois, les unités MPU ne permettent pas de contrer toutes les attaques connues et notamment les injections d'erreur sur le bus d'adresse. Il peut, de plus, être souhaité de réaliser un dispositif à plusieurs entités fonctionnelles offrant un degré de sécurité satisfaisant sans être équipé d'unité de protection mémoire.

Il pourrait donc être souhaité de prévoir un procédé permettant d'améliorer la sécurité des données dans une mémoire partagée, en remplacement ou en complément des protections offertes par une unité MPU.

Ainsi, des modes de réalisation de l'invention concernent un procédé de partage d'une mémoire dans un dispositif comprenant au moins une mémoire et au moins deux entités fonctionnelles agencées sur un même support ou dans un même boîtier, comprenant les étapes consistant à : configurer une première entité fonctionnelle pour qu'elle écrive et lise des données dans au moins une première zone de la mémoire, configurer une deuxième entité fonctionnelle pour qu'elle écrive et lise des données dans au moins une deuxième zone de la mémoire disjointe de la première zone mémoire; attribuer à la première entité fonctionnelle une première fonction de transformation de données et une première fonction de transformation inverse de données permettant de restaurer et/ou de vérifier la validité de données transformées par la première fonction de transformation; attribuer à la deuxième entité fonctionnelle une deuxième fonction de transformation de données et une deuxième fonction de transformation inverse de données permettant de restaurer et/ou de vérifier la validité de données transformées par la deuxième fonction de transformation, la deuxième fonction de transformation inverse étant incompatible avec la première fonction de transformation et la première fonction de transformation inverse incompatible avec la deuxième fonction de transformation; configurer la première entité fonctionnelle pour qu'elle applique la première fonction de transformation à une donnée avant de l'écrire dans la première zone mémoire, et applique la première fonction de transformation inverse à une donnée lue dans la première zone mémoire; et configurer la deuxième entité fonctionnelle pour qu'elle applique la deuxième fonction de transformation à une donnée avant de l'écrire dans la deuxième zone mémoire, et applique la deuxième fonction de transformation inverse à une donnée lue dans la deuxième zone mémoire par la deuxième entité fonctionnelle. Selon un mode de réalisation, le procédé comprend une étape consistant à configurer au moins la deuxième fonction de transformation inverse pour qu'elle fournisse une information d'erreur lors de la transformation inverse d'une donnée transformée au moyen de la première fonction de transformation.

Selon un mode de réalisation, le procédé comprend une étape consistant à exécuter une action de protection contre une tentative de lecture de données dans la première zone mémoire par la deuxième entité fonctionnelle lorsque la deuxième fonction de transformation inverse fournit l'information d'erreur après lecture d'une donnée dans la mémoire.

Selon un mode de réalisation, le procédé comprend les étapes consistant à configurer la première entité fonctionnelle pour qu'elle écrive également des données dans une troisième zone mémoire configurer la deuxième entité fonctionnelle pour qu'elle lise également des données dans la troisième zone mémoire attribuer à la première entité fonctionnelle, en sus de la première fonction de transformation, la deuxième fonction de transformation, sans lui attribuer la deuxième fonction de transformation inverse, et configurer la première entité fonctionnelle pour qu'elle applique la deuxième fonction de transformation à des données écrites dans la troisième zone mémoire et destinées à la deuxième entité fonctionnelle.

Selon un mode de réalisation, le procédé comprend les étapes consistant à configurer la première entité fonctionnelle pour qu'elle lise également des données dans la troisième zone mémoire configurer la deuxième entité fonctionnelle pour qu'elle écrive également des données dans la troisième zone mémoire attribuer à la deuxième entité fonctionnelle, en sus de la deuxième fonction de transformation, la première fonction de transformation, sans lui attribuer la première fonction de transformation inverse, et configurer la deuxième entité fonctionnelle pour qu'elle applique la première fonction de transformation à des données destinées à la première entité fonctionnelle écrites dans la troisième zone mémoire.

Selon un mode de réalisation, le procédé comprend les étapes consistant à configurer les première et deuxième entités fonctionnelles pour qu'elles écrivent et lisent des données dans une troisième zone mémoire attribuer à la première entité fonctionnelle, en sus de la première fonction de transformation et de la première fonction de transformation inverse, la deuxième fonction de transformation et la deuxième fonction de transformation inverse; et ne pas attribuer à la deuxième entité fonctionnelle la première fonction de transformation ni la première fonction de transformation inverse configurer la première entité fonctionnelle pour qu'elle applique la deuxième fonction de transformation à des données écrites dans la troisième zone mémoire et destinées à la deuxième entité fonctionnelle.

Selon un mode de réalisation, le procédé comprend les étapes consistant à configurer la première entité fonctionnelle pour que la première fonction de transformation comprenne l'ajout d'un bit de parité à une donnée à écrire, et pour que la première fonction de transformation inverse comprenne la vérification qu'une donnée lue dans la mémoire a un bit de parité valide; et configurer la deuxième entité fonctionnelle pour que la deuxième fonction de transformation comprenne l'ajout d'un bit de parité inversé à une donnée à écrire, et pour que la deuxième fonction de transformation inverse comprenne la vérification qu'une donnée lue dans la mémoire a un bit de parité inversé valide.

Selon un mode de réalisation, le procédé comprend l'étape consistant à configurer au moins une entité fonctionnelle pour que sa fonction de transformation comprenne une fonction de codage de données.

Selon un mode de réalisation, le procédé comprend l'étape consistant à prévoir une fonction de codage utilisant l'adresse d'écriture de la donnée dans la mémoire comme une variable de codage de la donnée.

Selon un mode de réalisation, le procédé comprend l'étape consistant à configurer au moins une entité fonctionnelle pour que sa fonction de transformation comprenne une fonction de signature de données et sa fonction de transformation inverse comprenne une fonction de vérification de signature fournissant une information d'erreur lors de la lecture d'une donnée n'ayant pas été transformée au moyen de la fonction de signature.

Selon un mode de réalisation, au moins l'une des entités fonctionnelles est choisie dans le groupe comprenant les contrôleurs d'accès direct en mémoire, les processeurs de traitement de signal, ou des fonctions logicielles exécutées par un ou plusieurs processeurs.

Des modes de réalisation de l'invention concernent également un dispositif comprenant au moins une mémoire et au moins deux entités fonctionnelles agencées sur un même support ou dans un même boîtier, dans lequel une première entité fonctionnelle est configurée pour écrire ou lire des données dans au moins une première zone de la mémoire une deuxième entité fonctionnelle est configurée pour écrire ou lire des données dans au moins une deuxième zone de la mémoire disjointe de la première zone mémoire; la première entité fonctionnelle comprend une première fonction de transformation de données et une première fonction de transformation inverse de données permettant de restaurer et/ou de vérifier la validité de données transformées par la première fonction de transformation; la deuxième entité fonctionnelle comprend une deuxième fonction de transformation de données et une deuxième fonction de transformation inverse de données permettant de restaurer et/ou de vérifier la validité de données transformées par la deuxième fonction de transformation, la deuxième fonction de transformation inverse étant incompatible avec la première fonction de transformation et la première fonction de transformation inverse incompatible avec la deuxième fonction de transformation; la première entité fonctionnelle est configurée pour appliquer la première fonction de transformation à une donnée avant de l'écrire dans la première zone mémoire, et appliquer la première fonction de transformation inverse à une donnée lue dans la première zone mémoire; et la deuxième entité fonctionnelle est configurée pour appliquer la deuxième fonction de transformation à une donnée avant de l'écrire dans la deuxième zone mémoire, et appliquer la deuxième fonction de transformation inverse à une donnée lue dans la deuxième zone mémoire.

Selon un mode de réalisation, la deuxième fonction de transformation inverse est configurée pour fournir une information d'erreur lors de la transformation inverse d'une donnée transformée au moyen de la première fonction de transformation.

Selon un mode de réalisation, la deuxième entité fonctionnelle est configurée pour exécuter une action de protection contre une tentative de lecture de données dans la première zone mémoire par la deuxième entité fonctionnelle, lorsque la deuxième fonction de transformation inverse fournit l'information d'erreur après lecture d'une donnée dans la mémoire par la deuxième entité fonctionnelle.

Selon un mode de réalisation, la première entité fonctionnelle est configurée pour écrire également des données dans une troisième zone mémoire; la deuxième entité fonctionnelle est configurée pour lire également des données dans la troisième zone mémoire la première entité fonctionnelle comprend, en sus de la première fonction de transformation, la deuxième fonction de transformation, mais ne comprend pas la deuxième fonction de transformation inverse; et la première entité fonctionnelle est configurée pour appliquer la deuxième fonction de transformation des données écrites dans la troisième zone mémoire et destinées à la deuxième entité fonctionnelle.

Selon un mode de réalisation, la première entité fonctionnelle est configurée pour lire également des données dans la troisième zone mémoire; la deuxième entité fonctionnelle est configurée pour écrire également des données dans la troisième zone mémoire; la deuxième entité fonctionnelle comprend, en sus de la deuxième fonction de transformation, la première fonction de transformation, mais ne comprend pas la première fonction de transformation inverse, et la deuxième entité fonctionnelle est configurée pour appliquer la première fonction de transformation à des données destinées à la première entité fonctionnelle écrites dans la troisième zone mémoire.

Selon un mode de réalisation, la première et la deuxième entités fonctionnelles sont configurées pour écrire et lire des données dans une troisième zone mémoire; la première entité fonctionnelle comprend, en sus de la première fonction de transformation et de la première fonction de transformation inverse, la deuxième fonction de transformation et la deuxième fonction de transformation inverse; la deuxième entité fonctionnelle ne comprend ni la première fonction de transformation ni la première fonction de transformation inverse; et la première entité fonctionnelle est configurée pour appliquer la deuxième fonction de transformation à des données écrites dans la troisième zone mémoire et destinées à la deuxième entité fonctionnelle.

Selon un mode de réalisation, la première fonction de transformation comprend l'ajout d'un bit de parité à une donnée à écrire et la première fonction de transformation inverse comprend la vérification qu'une donnée lue dans la mémoire a un bit de parité valide; la deuxième fonction de transformation comprend l'ajout d'un bit de parité inversé à une donnée à écrire et la deuxième fonction de transformation inverse comprend la vérification qu'une donnée lue dans la mémoire a un bit de parité inversé valide.

Selon un mode de réalisation, la fonction de transformation d'au moins une entité fonctionnelle comprend une fonction de codage de données.

Selon un mode de réalisation, la fonction de codage utilise l'adresse d'écriture de la donnée dans la mémoire comme une variable de codage de la donnée.

Selon un mode de réalisation, la fonction de transformation d'au moins une entité fonctionnelle comprend une fonction de signature de données et la fonction de transformation inverse correspondante comprend une fonction de vérification de signature fournissant une information d'erreur lors de la lecture d'une donnée n'ayant pas été transformée au moyen de la fonction de signature.

Selon un mode de réalisation, au moins l'une des entités fonctionnelles est choisie dans le groupe comprenant les contrôleurs d'accès direct en mémoire, les processeurs de traitement de signal, ou des fonctions logicielles exécutées par un ou plusieurs processeurs.

Des modes de réalisation d'un dispositif et d'un procédé de partage de mémoire selon l'invention seront décrits dans ce qui suit à titre non limitatif, en relation avec les figures jointes parmi lesquelles :

- la figure 1 est le schéma fonctionnel d'un premier mode de réalisation d'un dispositif selon l'invention,
- la figure 2 montre un mode de réalisation de fonctions de transformation de données représentées sous forme de bloc sur la figure 1,
- les figures 3A, 3B illustrent des exemples d'attaques du dispositif de la figure 1 qui sont contrées grâce au procédé selon l'invention,
- la figure 4 est le schéma fonctionnel d'un deuxième mode de réalisation d'un dispositif selon l'invention,
- la figure 5 montre un exemple d'architecture d'une entité fonctionnelle du dispositif de la figure 4,
- la figure 6 montre un exemple de réalisation de l'entité fonctionnelle de la figure 5,
- la figure 7 est le schéma fonctionnel d'un troisième mode de réalisation d'un dispositif selon l'invention,
- la figure 8 montre un exemple d'architecture du dispositif de la figure 8.

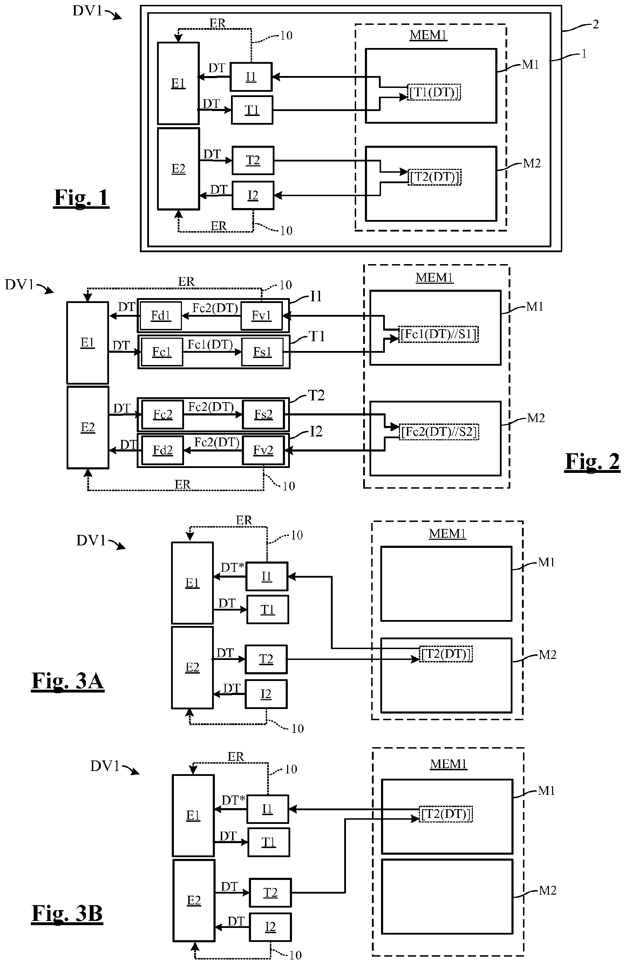

La figure 1 est le schéma fonctionnel d'un dispositif DV1 selon l'invention comprenant deux entités fonctionnelles E1, E2 et une mémoire MEM1, par exemple une mémoire vive (mémoire RAM). La mémoire comprend deux zones mémoire distinctes et disjointes M1 et M2 dédiées respectivement aux entités fonctionnelles E1 et E2, chacune étant configurée pour écrire et lire des données DT dans la zone mémoire qui lui est attribuée.

Les entités fonctionnelles E1, E2 et la mémoire MEM1 sont agencées sur un même support d'interconnexion 1, ou sur des supports d'interconnexion différents agencés dans un boîtier 2 du dispositif et interconnectés. Le support d'interconnexion 1 peut être une microplaquette de semi-conducteur si les entités fonctionnelles et la mémoire sont intégrées sur la même puce de semi-conducteur, ou un circuit imprimé si les entités fonctionnelles et la mémoire sont intégrées sur des puces de semi-conducteur différentes. Les entités fonctionnelles et/ou la mémoire peuvent également être agencées sur des circuits imprimés différents. Les entités fonctionnelles E1, E2 peuvent être deux processeurs différents, par exemple un processeur principal et un processeur périphérique, deux unités centrales (CPU) d'un processeur multi-coeurs possédant plusieurs coeurs physiques qui fonctionnent en parallèle, des programmes (services, applications) exécutés par le même processeur ou des processeurs différents, des utilisateurs différents d'un même processeur n'ayant pas les mêmes droits d'accès à la mémoire, par exemple un utilisateur administrateur et un utilisateur non-administrateur, etc., ou une combinaison de ces divers types d'entités fonctionnelles. Le partage de la mémoire permet à chaque entité fonctionnelle de disposer d'un espace dédié où elle peut stocker des données d'application, des variables, des codes, etc.

Pour protéger les données présentes dans chaque zone mémoire M1, M2 et/ou détecter une lecture interdite de chaque zone mémoire par l'entité à qui cette zone mémoire n'a pas été attribuée, chaque entité fonctionnelle E1, E2 est pourvue d'une fonction de transformation de données, respectivement T1, T2, et d'une fonction de transformation inverse, respectivement I1, I2. Sur la figure 1 et les figures suivantes, les fonctions T1, I1, T2, I2 sont représentées à l'extérieur des blocs désignant les entités fonctionnelles E1, E2, mais peuvent aussi être considérées comme faisant partie intégrante des entités fonctionnelles E1, E2.

Chaque entité fonctionnelle E1, E2 est configurée pour écrire des données dans la zone mémoire qui lui est réservée par l'intermédiaire de la fonction de transformation T1, T2 qui lui est attribuée, et pour lire des données dans la zone mémoire qui lui est réservée par l'intermédiaire de la fonction de transformation inverse I1, I2 qui lui est attribuée.

Chaque fonction de transformation T1, T2 est prévue pour fournir, à partir de données DT devant être écrites dans la mémoire, des données transformées T1(DT), T2(DT), respectivement. Ainsi l'entité fonctionnelle E1 écrit des données T1(DT) dans la zone mémoire M1 et l'entité fonctionnelle E2 écrit des données T2(DT) dans la zone mémoire M2. Les données transformées peuvent être les données initiales DT transformées par codage ou les données initiales signées, ou encore les données initiales transformées par codage et signées ou signées avant d'être transformées par codage.

Chaque fonction de transformation inverse I1, I2 est prévue pour restaurer et/ou vérifier la validité des données initiales DT à partir des données transformées T1 (DT), T2(DT), soit, dans le cas d'une restauration des données initiales :

$$I1(T1(DT))=DT$$

$$I2(T2(DT))=DT$$

ou, dans le cas d'une vérification de la validité des données T1 (DT), T2(DT):

$$I1(T1(DT))=OK \text{ (validité confirmée)}$$

$$I2(T2(DT))=OK \text{ (validité confirmée)}$$

ou encore, dans le cas d'une restauration et d'une vérification de la validité des données lues dans la mémoire :

$$I1(T1(DT))=DT \text{ et } I1(T1(DT))=OK$$

$$I2(T2(DT))=DT \text{ et } I2(T2(DT))=OK$$

Par ailleurs, les fonctions de transformation et de transformation inverse des entités fonctionnelles E1, E2 sont conçues pour être incompatibles d'une entité à l'autre, la fonction de transformation inverse I1 étant incompatible avec la fonction de transformation T2 et la fonction de transformation inverse I2 étant incompatible avec la fonction de transformation T1. Ainsi, la fonction de transformation inverse I1 ne permet pas de restaurer et/ou de vérifier la validité de données DT transformées par la fonction de transformation T2, et la fonction de transformation inverse I2 ne permet pas de restaurer et/ou de vérifier la validité de données transformées par la fonction de transformation T1. Ainsi :

- dans le cas d'une restauration des données initiales, les données fournies par la fonction de transformation inverse, notées DT*, sont erronées et différentes des données initiales DT :

$$I1(T2(DT))=DT^*$$

$$I2(T1(DT))=DT*$$

- dans le cas d'une vérification de la validité des données fournies par une fonction de transformation ne correspondant pas à la fonction de transformation inverse utilisée, une information d'erreur "ER" est fournie :

$$I1(T2(DT))=ER$$

$$I2(T1(DT))=ER$$

- dans le cas d'une restauration des données initiales et d'une vérification de la validité des données fournies par une fonction de transformation ne correspondant pas à la fonction de transformation inverse utilisée, des données erronées DT* sont fournies et une information d'erreur est également fournie :

$$I1(T2(DT))=DT* \text{ et } I1(T2(DT))=ER$$

$$I2(T1(DT))=DT* \text{ et } I2(T1(DT))=ER$$

Les fonctions T1, T2, I1, I2 peuvent être réalisées sous forme de circuits hardwares agencés dans le chemin de données reliant les entités fonctionnelles E1, E2 à la mémoire MEM1, par exemple des circuits à logique câblée. Dans le cas où les fonctions I1, I2 assurent la vérification de la validité des données lues dans les zones mémoire (c'est-à-dire garantissent que ces données ont bien été transformées par la fonction de transformation correspondante), celles-ci fournissent l'information d'erreur sous la forme d'un signal d'erreur ER qui est acheminé, via une liaison hardware 10, à l'entité à laquelle elles sont associées, la fonction I1 fournissant le signal d'erreur ER à l'entité fonctionnelle E1 et la fonction I2 fournissant le signal d'erreur ER à l'entité fonctionnelle E2. Le signal d'erreur est par exemple égal à 1 en cas d'invalidité des données. L'apparition du signal d'erreur provoque l'exécution d'une action de protection contre une tentative de lecture, par l'entité concernée, de données dans une zone mémoire qui ne lui a pas été attribuée, par exemple un blocage hardware ou software ou une remise à zéro de l'entité concernée, ou la fourniture d'une donnée arbitraire à la place de la donnée erronée, car celle-ci, bien qu'étant erronée, pourrait contenir des informations exploitables.

Les fonctions T1, T2, I1, I2 peuvent également être software, par exemple être réalisées sous forme de sous-programmes appelés par les entités fonctionnelles E1, E2 lors de l'écriture et de la lecture de données dans la mémoire MEM1. Des techniques connues de sécurisation de programmes permettent d'éviter que les entités fonctionnelles E1, E2 ne soient déroutées par un fraudeur pour écrire des données dans la mémoire sans préalablement les transformer au moyen des fonctions T1, T2 ou pour lire des données sans passer par les fonctions de transformation inverse I1, I2. Par exemple, les sous-programmes mettant en oeuvre les fonctions T1, T2, I1, I2 peuvent fournir des signatures qui autorisent l'accès à la mémoire en écriture ou en lecture, de sorte que leur exécution est obligatoire pour accéder à la mémoire. L'information d'erreur ER est dans ce cas software et peut être traitée d'une manière similaire au signal d'erreur hardware, pour exécuter une action de protection contre la lecture d'une zone mémoire par une entité fonctionnelle à qui la zone mémoire n'a pas été attribuée, par exemple un programme de blocage de l'entité qui constate l'existence de l'erreur de lecture. L'erreur peut par exemple donner lieu à l'appel direct, par le sous-programme de transformation inverse, à un sous-programme conçu pour exécuter cette action.

La figure 2 montre un exemple de réalisation du dispositif DV1 dans lequel chaque fonction de transformation T1, T2 comprend une fonction de codage, respectivement Fc1, Fc2, et une fonction de signature, respectivement Fs1, Fs2. Réciproquement, chaque fonction de transformation inverse I1, I2 comprend une fonction de décodage, respectivement Fd1, Fd2, et une fonction de vérification de signature, respectivement Fv1, Fv2.

Sur la figure 2, la fonction de signature Fs1, Fs2 est agencée après la fonction de codage Fc1, Fc2, de sorte que la fonction de transformation T1 fournit des données codées signées Fc1(DT)//S1 (// étant le symbole de la concaténation et S1 étant la signature fournie par la fonction Fs1) qui sont enregistrées dans la zone mémoire M1. De même, la fonction de transformation T2 fournit des données codées signées Fc2(DT)//S2 (S2 étant la signature fournie par la fonction Fs2) qui sont enregistrées dans la zone mémoire M2.

La fonction de vérification signature Fv1, Fv2 est donc ici agencée avant la fonction de décodage Fc1, Fc2, de sorte que la fonction de vérification Fv1 vérifie la validité de la signature S1 des données codées Fc1(DT) avant que la fonction de décodage Fd1 ne restaure les données DT, Fd1 étant telle que :

$$Fd1(Fc1(DT))=DT$$

De même, la fonction de vérification Fv2 vérifie la validité de la signature S2 des données codées Fc2(DT) avant que la fonction de décodage Fd2 ne restaure les données DT, Fd2 étant telle que :

$$Fd2(Fc2(DT))=DT$$

Dans une variante, la fonction signature Fs1, Fs2 est agencée avant la fonction de codage Fc1, Fc2, de sorte que la fonction de transformation T1 fournit des données signées codées Fc1(DT//S1) et la fonction de transformation T2 fournit des données signées codées Fc2(DT//S2). Les données sont alors décodées avant que leur signature ne soit vérifiée. L'ordre d'exécution des opérations de signature et de codage peut également être inversé entre les deux fonctions de transformation, l'une codant les données avant de les signer et l'autre signant les données avant de les coder.

L'incompatibilité de la fonction I1 avec la fonction T2 et de la fonction I2 avec la fonction T1 se traduit ici par une incompatibilité entre la fonction de vérification de signature Fv1 et la fonction de signature Fs2, entre la fonction de vérification de signature Fv2 et la fonction de signature Fs1, ainsi qu'entre la fonction de décodage Fdl et la fonction de codage Fc2 et entre la fonction de décodage Fd2 et la fonction de codage Fc1. En d'autres termes :

- la vérification par la fonction Fv1 d'une signature S2 générée par la fonction de signature Fs2 donne lieu à l'émission de l'information d'erreur ER,
- la vérification par la fonction Fv2 d'une signature S1 générée par la fonction de signature Fs1 donne lieu à l'émission de l'information d'erreur ER,
- le décodage par la fonction Fdl de données Fc2(DT) codées par la fonction Fc2 donne des données erronées DT*, et
- le décodage par la fonction Fd2 de données Fc1(DT) codées par la fonction Fc1 donne des données erronées DT*.

Dans certains modes de réalisation, la fonction de transformation T1 peut ne comprendre que la fonction de codage Fc1 ou ne comprendre que la fonction de signature Fs1. La fonction de transformation T2 peut ne comprendre que la fonction de codage Fc2 ou ne comprendre que la fonction de signature Fs2. La fonction de transformation inverse I1 peut ne comprendre que la fonction de décodage Fdl ou ne comprendre que la fonction de vérification de signature Fv1. La fonction de transformation inverse I2 peut ne comprendre que la fonction de décodage Fd2 ou ne comprendre que la fonction de vérification de signature Fv2.

Dans des modes de réalisation de l'invention, les deux fonctions Fc1, Fc2 utilisent un même algorithme de codage exécutant un codage fonction d'une clé de codage qui est différente pour chacune des fonctions. La clé peut ne comprendre qu'un bit, ou plusieurs bits. Le codage peut être un codage complexe utilisant un algorithme de cryptographie standardisé ou "propriétaire", ou au contraire être d'une grande simplicité et comprendre, par exemple, un mélange des bits de la donnée réalisé selon une règle de mélange qui est fonction de la clé. Dans un mode de réalisation, le codage est le suivant :

- la fonction Fc1 n'inverse pas la polarité des bits d'une donnée DT et ajoute à la donnée un bit de plus fort poids égal à 0 signifiant que la polarité des bits n'a pas été inversée, et
- la fonction Fc2 inverse la polarité des bits d'une donnée DT (chaque bit égal à 1 devient égal 0 et chaque bit égal à 0 devient égal à 1) et ajoute à la donnée un bit de plus fort poids égal à 1 signifiant que la polarité des bits a été inversée.

Dans ce cas la fonction de décodage Fdl ne modifie par les données et peut optionnellement vérifier que le bit de plus fort poids est égal 1, et dans la négative émettre une information d'erreur de codage, en sus d'une information d'erreur de signature fournie par la fonction de vérification de signature. La fonction de décodage Fd2 comprend par contre une étape consistant à inverser la polarité de tous les bits de la donnée DT, et peut optionnellement vérifier que le bit de plus fort poids est égal 0, et dans la négative émettre une information d'erreur de codage.

Dans une variante :

- la fonction de codage Fc1 génère un bit de polarité aléatoire 0 ou 1, inverse la valeur des bits de la donnée si le bit de polarité aléatoire est égal 1 et n'inverse pas la valeur des bits de la donnée si le bit de polarité aléatoire est égal à 0, et insère dans la donnée le bit de polarité comme bit de plus fort poids.
- la fonction de codage Fc2 génère un bit de polarité aléatoire 0 ou 1 et exécute une convention de codage inverse de la précédente, en inversant la valeur des bits de la donnée si le bit de polarité aléatoire est égal 0 (au lieu de 1 pour la fonction Fc1) et en n'inversant pas la valeur des bits de la donnée si le bit de polarité aléatoire est égal à 1 (au lieu de 0 pour la fonction Fc1), et insère dans la donnée le bit de polarité comme bit de plus fort poids.

- la fonction de décodage Fdl évalue la valeur du bit de plus fort poids formant bit de polarité, inverse la valeur des bits de la donnée si le bit de polarité est égal 1 et n'inverse pas la valeur des bits de la donnée si le bit de polarité est égal à 0, et retire le bit de polarité de la donnée,

- la fonction de décodage Fd2 évalue la valeur du bit de plus fort poids formant bit de polarité, inverse la valeur des bits de la donnée si le bit de polarité est égal 0 et n'inverse pas la valeur des bits de la donnée si le bit de polarité est égal à 1, et retire le bit de polarité de la donnée.

Dans cette variante, une erreur de décodage n'est pas détectée par la fonction de décodage. L'entité qui lit les données écrites par l'autre entité reçoit simplement des données qui sont aléatoirement erronées.

Dans certains modes de réalisation, la fonction de codage Fc1, Fc2 utilise, comme donnée d'entrée, en sus de la donnée DT, l'adresse AD où la donnée doit être écrite. Dans ce cas la donnée DT transformée peut s'écrire :

$$Fc1(AD, DT),$$

ou

$$Fc2(AD, DT)$$

Un tel codage renforce la résistance du dispositif contre des attaques par injection d'erreur sur un bus d'adresse. En effet, dans ce cas, la donnée est décodée en utilisant une adresse présente dans l'instruction de lecture, qui est différente de l'adresse où la donnée a été lue en raison de l'injection d'erreur. La donnée décodée est donc invalide.

Des modes de réalisation de l'invention peuvent également prévoir l'utilisation de fonctions de signature Fs1, Fs2 connues, telles que des codes classiques de détection d'erreur EDC ("Error Détection Code") ou des codes plus complexes de correction d'erreur ECC ("Error Correction Code") tels des codes de Hamming.

Par exemple, la fonction Fs1 peut comprendre l'ajout à la donnée d'une signature S1 formée par un code CRC (code de redondance cyclique) qui est fonction des bits de la donnée, et la fonction Fs2 peut comprendre l'ajout à la donnée d'une signature S2 formée par un code CRC inversé ou combiné à une clé. Dans ce cas la fonction de vérification de signature Fv1 recalcule le code CRC de la donnée et le compare à celui qui forme sa signature S1, tandis que la fonction de vérification de signature Fv2 recalcule le code CRC de la donnée, inverse la valeur de ses bits ou le recombine à la clé, puis le compare à celui qui forme la signature S2.

Dans un mode de réalisation avantageux en raison de sa simplicité, la fonction Fs1 comprend l'ajout à la donnée d'une signature formée par un bit de parité et la fonction Fs2 comprend l'ajout à la donnée d'une signature S2 formée par un bit de parité inversé.

Dans tous ces exemples, la fonction de vérification Fv1 est incompatible avec la fonction de signature Fs2 et la fonction de vérification Fv2 est incompatible avec la fonction de signature Fs1, de sorte que la vérification par une entité fonctionnelle E1, E2 de la signature d'une donnée signée par l'autre entité fonctionnelle donne lieu à l'émission d'une information d'erreur.

Le tableau 1 ci-dessous donne un exemple de fonction de transformation T1 comprenant une fonction de codage Fc1 sans changement de polarité et ajout d'un bit de polarité égal à 0, combinée à une fonction de signature Fs1 comprenant l'ajout d'un bit de parité, et l'exemple d'une fonction de transformation T2 comprenant une fonction de codage Fc2 avec changement de la polarité des bits de la donnée et ajout d'un bit de polarité égal à 1, combinée à une fonction de signature Fs2 comprenant l'ajout d'un bit de parité inversé.

**Tableau 1**

| | Transformation T1 | | Transformation T2 | |
|---|---|---|---|---|
| | Codage Fc1 | Signature Fs1 | Codage Fc2 | Signature Fs2 |
| Donnée initiale DT | Ajout du bit de polarité égal à 0 | Ajout d'un bit de parité à la donnée codée | Polarité des bits inversée et ajout du bit de polarité égal à 1 | Ajout d'un bit de parité inversé à la donnée codée |
| 1000 | 1000**0** | 10000**1** | 0111**1** | 01111**1** |

Le tableau 2 ci-dessous montre un exemple de réalisation dans lequel le bit de polarité n'est pas ajouté à la donnée.

**Tableau 2**

| | Transformation T1 | | Transformation T2 | |
|---|---|---|---|---|
| | Codage Fc1 | Signature Fs1 | Codage Fc2 | Signature Fs2 |
| Donnée initiale DT | Pas de changement de polarité | Ajout d'un bit de parité à la donnée codée | Polarité des bits inversée | Ajout d'un bit de parité inversé à la donnée codée |
| 1000 | 1000 | 1000**1** | 0111 | 0111**0** |

Dans les exemples ci-dessus, les fonctions de transformation T1 et T2 reposent sur le même algorithme de codage et/ou signature et sont différentiées au moyen d'un paramètre formant une clé ou l'équivalent d'une clé, tel que le bit de polarité. Dans d'autres modes de réalisation, les fonctions de transformation mettent en oeuvre des algorithmes de codage distincts, l'une utilisant par exemple une fonction de mélange de bits et l'autre la fonction d'inversion de polarité.

Les figures 3A, 3B montrent des exemples de violation de l'espace mémoire MEM1 que le procédé selon l'invention permet de contrer. Dans l'exemple de la figure 3A, l'entité fonctionnelle E2 a légitimement écrit dans sa zone mémoire M2 une donnée T2(DT) transformée par la fonction T2. Cette donnée est ensuite illégitimement lue par l'entité fonctionnelle E1. Elle se voit donc appliquer la fonction de transformation inverse I1 qui est incompatible avec la fonction de transformation T2. Il s'ensuit que l'information d'erreur ER est émise si la fonction I1 inclut la fonction de vérification de signature Fv1 avec ou sans fonction de décodage Fd1. Si la fonction I1 inclut la fonction de décodage Fdl avec ou sans la fonction de vérification de signature Fvl, la donnée lue DT* fournie par la fonction Fdl est erronée (ou aléatoirement erronée). L'information d'erreur ER peut également être émise par la fonction de décodage Fdl si celle-ci inclut une détection d'erreur (par exemple lorsque la clé ou une partie de la clé est incluse dans la donnée et qu'une vérification de la relation entre les bits de la donnée et les bits de la clé est possible). Comme indiqué plus haut, l'information d'erreur peut être utilisée pour bloquer l'entité fonctionnelle E1 et ainsi stopper la lecture de la donnée invalide.

Dans l'exemple de la figure 3B, l'entité fonctionnelle E2 a illégitimement écrit, dans la zone mémoire M1 de l'entité fonctionnelle E1, une donnée T2(DT) transformée par la fonction T2. Cette donnée est ensuite légitimement lue par l'entité fonctionnelle E1. Elle se voit donc appliquer comme précédemment la fonction de transformation inverse I1 qui est incompatible avec la fonction de transformation T2. Les conséquences sont similaires à celles décrites en relation avec la figure 3A.

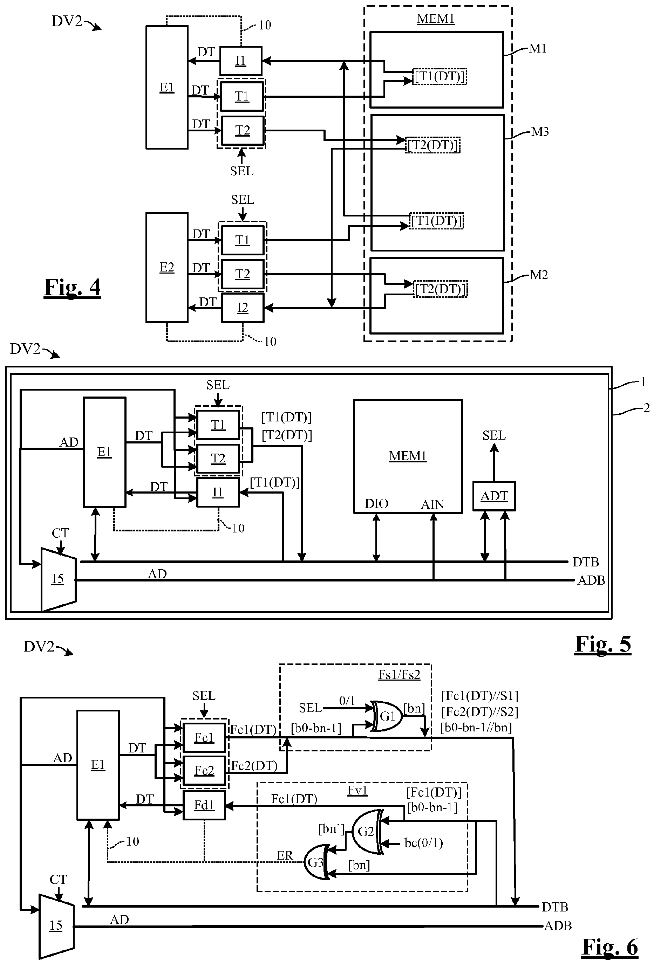

La figure 4 est un schéma fonctionnel montrant un autre mode de réalisation DV2 d'un dispositif selon l'invention, dans lequel une zone mémoire M3 partagée par les deux entités fonctionnelles E1, E2 est prévue dans la mémoire MEM1, en sus des zones M1, M2. L'objectif visé ici est d'utiliser la zone mémoire M3 comme zone d'échange de données de l'entité fonctionnelle E1 vers l'entité fonctionnelle E2 et de l'entité fonctionnelle E2 vers l'entité fonctionnelle E1.

A cet effet, l'entité fonctionnelle E1 se voit attribuer la fonction de transformation T2 de l'entité fonctionnelle E2 sans la fonction de transformation inverse 12, et l'entité fonctionnelle E2 se voit attribuer la fonction de transformation T1 de l'entité fonctionnelle E1 sans la fonction de transformation inverse I1. L'entité fonctionnelle E1 utilise la fonction de transformation T2 pour écrire dans la zone mémoire M3 des données destinées à l'entité fonctionnelle E2, et continue d'utiliser la fonction de transformation T1 pour écrire des données dans la zone mémoire M1. Une fois écrites dans la zone mémoire M3, les données T2(DT) ne peuvent plus être lues par l'entité fonctionnelle E1 car celle-ci ne possède pas la fonction de transformation inverse I2, et ne peuvent qu'être lues par l'entité fonctionnelle E2. Réciproquement, l'entité fonctionnelle E2 utilise la fonction de transformation T1 pour écrire dans la zone mémoire M3 des données destinées à l'entité fonctionnelle E1, et continue d'utiliser la fonction de transformation T2 pour écrire des données dans la zone mémoire M2. Une fois écrites dans la zone mémoire M3, les données T1(DT) ne peuvent plus être lues par l'entité fonctionnelle E2 car celle-ci ne possède pas la fonction de transformation inverse I1, et ne peuvent qu'être lues par l'entité fonctionnelle E1.

La sélection par l'entité fonctionnelle E1 de la fonction de transformation T1 ou T2 et la sélection par l'entité fonctionnelle E2 de la fonction de transformation T2 ou T1 est assurée par un signal de sélection SEL qui est fonction de l'adresse de la donnée à écrire. Ce signal est par exemple égal à 1 si l'adresse de la donnée se trouve dans la zone mémoire M3, sinon est à 0. Dans ce cas l'entité fonctionnelle E1 sélectionne la fonction T2 si le signal SEL est égal à 1, sinon sélectionne par défaut la fonction T1. L'entité fonctionnelle E2 sélectionne automatiquement la fonction T1 si le signal SEL est égal à 1, sinon sélectionne par défaut la fonction T2.

Dans une variante, l'entité fonctionnelle E2 ne possède pas la fonction de transformation T1 et est seulement autorisée à lire la zone mémoire M3 ou, inversement, l'entité fonctionnelle E1 ne possède pas la fonction de transformation T2 et est seulement autorisée à lire la zone mémoire M3.

La figure 5 montre un exemple d'architecture du dispositif DV2. Comme précédemment, les entités fonctionnelles E1, E2 et la mémoire MEM1 sont agencées sur un même support d'interconnexion 1 ou sur des supports d'interconnexion différents agencés dans un boîtier 2 du dispositif. Seule l'entité fonctionnelle E1 est représentée, l'entité fonctionnelle E2 étant de même architecture et de même agencement en remplaçant la référence "I1" par la référence "12". Le dispositif DV2 comprend un bus de données DTB, un bus d'adresse ADB, et un multiplexeur d'adresse 15 commandé par un signal de contrôle CT, dont la sortie est reliée au bus d'adresse ADB. Le signal de contrôle CT est fourni par un arbitre de bus, non représenté, qui octroie à chacune des entités des périodes d'accès à la mémoire MEM1 sur requêtes de celles-ci, et gère les priorités d'accès.

La mémoire MEM1 comporte une entrée/sortie de données DIO reliée au bus de données DTB et une entrée d'adresse AIN reliée au bus d'adresse ADB. L'entité fonctionnelle E1 comporte une sortie d'adresse reliée à une entrée du multiplexeur d'adresse 15 dont l'autre entrée reçoit une sortie d'adresse de l'entité fonctionnelle E2 (non représentée). Les fonctions de transformation T1, T2 de l'entité fonctionnelle E1, sélectionnées par le signal SEL, comportent chacune une sortie reliée au bus de données DTB, une entrée reliée à une sortie de données de l'entité fonctionnelle E1, fournissant les données DT à écrire dans la mémoire MEM1. La fonction de transformation inverse I1 comporte une entrée de données reliée au bus de données DTB, pour recevoir des données transformées T1(DT) et une sortie reliée à une entrée de données de l'entité fonctionnelle E1, pour fournir à l'entité fonctionnelle E1 des données DT présent dans les données transformées T1(DT). Optionnellement, les fonctions T1, T2 et la fonction I1 comportent également une entrée reliée à la sortie d'adresse de l'entité fonctionnelle E1, pour utiliser l'adresse AD d'une donnée comme donnée d'entrée pour la transformation des données DT en données T1(DT) ou T2(DT) et leur décodage en fonction de l'adresse AD.

Le dispositif DV2 comprend également un détecteur d'adresse ADT ayant une entrée d'adresse reliée au bus d'adresse ADB et fournissant le signal de sélection SEL aux entités fonctionnelles E1 et E2. Ce détecteur d'adresse est par exemple un circuit programmable à accès sécurisé comprenant des registres d'adresses (non représentés) configurables via le bus de données DTB, tel que représenté, ou via des liaisons privée sécurisées. Ces registres permettent de définir l'adresse de début et de fin de la zone partagée M3.

Bien que l'exemple décrit ici ne prévoit qu'une zone partagée M3, le détecteur d'adresse ADT peut être plus complexe et permettre la programmation de plusieurs zones d'adresse. Le détecteur pourrait également fournir un signal de sélection SEL1 dédié à l'entité fonctionnelle E1 et un signal de sélection SEL2 dédié à l'entité fonctionnelle E2. Le détecteur d'adresse s'apparente donc à une unité de protection de mémoire de type simplifié dépourvue des fonctions habituelles de surveillance d'instructions et de contrôle des droits d'accès des entités fonctionnelles E1, E2, la sécurisation de la mémoire MEM1 étant ici offerte par la prévision des fonction de transformation et de transformation inverse. Dans des variantes de réalisation, le procédé de partage de mémoire selon l'invention est combiné avec l'utilisation d'une véritable unité de protection de mémoire (MPU), qui peut alors être configurée pour fournir le signal SEL et ainsi remplacer le détecteur d'adresse ADT.

La figure 6 montre un exemple de réalisation de l'entité fonctionnelle E1 de la figure 5 dans lequel la fonction de transformation T1 comprend une fonction de codage Fc1 et une fonction de signature Fs1, la fonction de transformation T2 comprend une fonction de codage Fc2 et une fonction de signature Fs2, et la fonction de transformation inverse I1 comprend une fonction de décodage Fdl et une fonction de vérification de signature Fv1.

Les fonctions de codage Fc1, Fc2 et de décodage Fdl sont représentées sous forme de blocs et peuvent être réalisées de la manière décrite plus haut, sous la forme d'un algorithme à logique câblée utilisant une clé différente pour chaque fonction de codage. Les fonctions de codage Fc1, Fc2 ont chacune une entrée reliée à la sortie de données de l'entité fonctionnelle E1, pour recevoir les données DT, et optionnellement une entrée à la sortie d'adresse de l'entité fonctionnelle E1, pour recevoir des adresses AD, et une sortie reliée au bus de données DTB. La fonction de décodage Fdl a une entrée reliée au bus de données DTB, et optionnellement un entrée reliée à la sortie d'adresse de l'entité fonctionnelle E1, pour recevoir des adresses AD, et une sortie reliée à l'entrée de données de l'entité fonctionnelle E1. L'entrée et la sortie de données de l'entité fonctionnelle E1 représentées comme distinctes sur la figure peuvent être formées par un même port binaire.

Les fonctions de signature Fs1, Fs2 sont réalisées ici au moyen d'une porte logique G1 de type OU EXCLUSIF ("XOR") ayant une entrée recevant le signal SEL et N entrées recevant des bits $b0$-$bn$-1 d'une donnée codée Fc1(DT), Fc2(DT) fournie par la fonction Fc1, respectivement Fc2. Selon la valeur du signal SEL, à savoir 0 ou 1, la sortie de la porte G1 fournit un bit de parité de la donnée codée Fc1(DT) ou un bit de parité inversé de la donnée codée Fc2(DT). Le bit de parité ou le bit de parité inversé est concaténé aux bits de la donnée codée en tant que bit "bn" de plus fort poids pour former une donnée codée signée $b0$-$bn$-1//$bn$ dans laquelle le bit $bn$ forme la signature S1 ou la signature S2, soit une donnée Fc1(DT)//S1 ou Fc2(DT)//S2. La concaténation peut consister dans l'ajout d'une piste conductrice aux N pistes véhiculant les bits, l'ensemble étant directement relié au bus de données DTB, qui comprend alors N+1 bits, ou relié au bus de données par l'intermédiaire d'un circuit tampon (non représenté).

La fonction de vérification de signature Fv1 est réalisée ici au moyen de deux portes G2, G3 de type OU EXCLUSIF. La porte G2 a une entrée recevant un bit de configuration bc de valeur fixe 0 ou 1, et N entrées recevant des bits b0-bn-1 d'une donnée codée Fc1(DT) ou Fc2(DT) fournie par le bus de données DTB après lecture de la mémoire MEM1 (non représentée, Cf. Fig. 5). Les bits b0-bn-1 sont également appliqués sur l'entrée de donnée de la fonction de décodage Fd1. Le bit de configuration bc est égal ici égal à 0 et la sortie de la porte G2 fournit un bit de parité bn' fonction des bits de donnée b0-bn-1, qui est appliqué sur une entrée de la porte G3. Celle-ci reçoit sur une autre entrée le bit de parité bn prélevé sur le bus de données DTB et fournit le signal d'erreur ER qui est égal à 1 quand les bits de parité bn et bn' sont différents, ce qui indique que la donnée lue dans la mémoire a été corrompue pendant son stockage ou que la donnée a été écrite dans la mémoire par l'entité fonctionnelle E2 et présente donc un bit de parité inversé.

Il sera noté que dans cet exemple de réalisation, la structure de l'entité fonctionnelle E2 est similaire à celle de la figure 6 en inversant le signal SEL à l'entrée de la porte G1 de manière que le bit de parité inversé soit fourni quand SEL=0, et en mettant à 1 le bit de configuration bc, de manière que la porte G2 fournisse un bit de parité inversé au lieu du bit de parité.

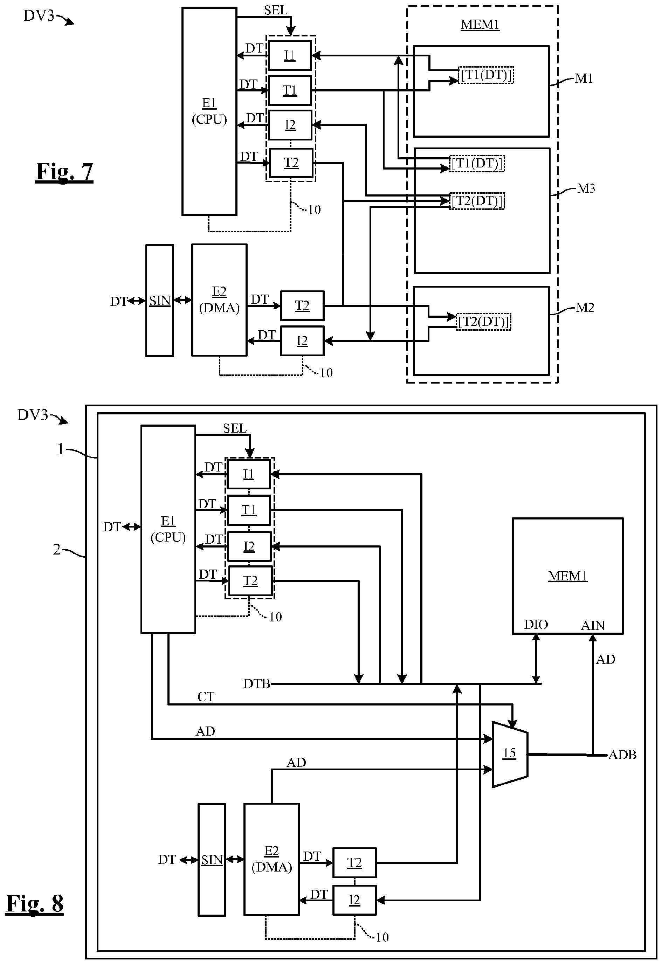

La figure 7 montre un autre mode de réalisation DV3 d'un dispositif selon l'invention dans lequel l'entité fonctionnelle E1 est une entité de confiance, par exemple une unité centrale CPU d'un processeur sécurisé, désigné entité "maître". L'entité fonctionnelle E2 est alors une entité "esclave", il s'agit par exemple d'un processeur d'accès direct à la mémoire "DMA" ("Direct Memory Access"). Le processeur DMA formant l'entité fonctionnelle E2 comporte une entrée série SIN reliée à divers processeurs périphériques qui peuvent ainsi accéder directement à la mémoire MEM1 sans passer par l'entité fonctionnelle E1.

La mémoire comporte une zone mémoire M3 qui est comme précédemment accessible en lecture et en écriture aux deux entités fonctionnelles E1, E2. A l'instar du mode de réalisation de la figure 4, l'objectif visé ici est d'utiliser la zone mémoire M3 comme zone d'échange de données de l'entité fonctionnelle E1 vers l'entité fonctionnelle E2 et de l'entité fonctionnelle E2 vers l'entité fonctionnelle E1. Toutefois, à la différence du mode de réalisation de la figure 4, l'entité fonctionnelle E1 se voit attribuer la fonction de transformation T2 de l'entité fonctionnelle E2 ainsi que sa fonction de transformation inverse I2, en sus de sa propre fonction de transformation T1 et sa fonction de transformation inverse I1, tandis que l'entité fonctionnelle E2 ne détient que ses propres fonctions de transformation T2 et de transformation inverse I2.

Comme représenté sur la figure, l'entité fonctionnelle E1 utilise la fonction de transformation T2 pour écrire dans la zone mémoire M3 des données T2(DT) destinées à l'entité fonctionnelle E2, et peut utiliser la fonction de transformation T1 pour écrire dans la zone mémoire M1 ou dans la zone mémoire M3 des données T1(DT) qui ne sont pas destinées à l'entité fonctionnelle E2 et ne peuvent être lues par celle-ci. Une fois écrites dans la zone mémoire M3, les données T2(DT) peuvent aussi être relues par l'entité fonctionnelle E1 car celle-ci détient ici la fonction de transformation inverse I2.

Par ailleurs, l'entité fonctionnelle E2 utilise sa fonction de transformation T2 pour écrire dans la zone mémoire M3 des données T2(DT) destinées à l'entité fonctionnelle E1, que l'entité fonctionnelle E1 peut lire grâce à la fonction de transformation inverse I2, ou pour écrire dans la zone mémoire M1 des données T2(DT) qui lui sont propres, mais que l'entité fonctionnelle E1 pourrait également lire étant ici maître de la mémoire.

L'entité fonctionnelle E1 utilise comme précédemment un signal de sélection SEL d'une part pour sélectionner la fonction de transformation T1 ou la fonction de transformation T2 lors de l'écriture d'une donnée dans la zone mémoire M1 ou M3 (elle pourrait également écrire des données dans la zone mémoire M2 de l'entité fonctionnelle E2), et d'autre part pour sélectionner la fonction de transformation inverse I1 ou la fonction de transformation inverse I2 lors de la lecture d'une donnée dans la zone mémoire M1 ou M3. Ce signal de sélection n'est pas fourni ici par un détecteur d'adresse ADT comme précédemment, mais par l'entité elle-même E1 en tant qu'entité de confiance maître de la mémoire.

La figure 8 montre un exemple d'architecture du dispositif DV3. Comme précédemment, les entités fonctionnelles E1, E2 et la mémoire MEM1 sont agencées sur un même support d'interconnexion 1 ou sur des supports d'interconnexion différents agencés dans un boîtier 2 du dispositif. Le dispositif DV3 comprend comme précédemment le bus de données DTB et le bus d'adresse ADB, et le multiplexeur d'adresse 15 commandé par le signal de contrôle CT. Le signal de contrôle CT est ici fourni par l'entité fonctionnelle E1 qui est désignée ici comme arbitre du bus d'adresse et octroie des périodes d'accès à la mémoire MEM1 à l'entité fonctionnelle E2 et aux processeurs périphériques, sur requête de l'entité fonctionnelle E2 ou des processeurs périphériques.

La mémoire MEM1 comporte comme précédemment une entrée/sortie de données DIO reliée au bus de données DTB et une entrée d'adresse AIN reliée au bus d'adresse ADB. L'entité fonctionnelle E1 comporte une sortie d'adresse reliée à une entrée du multiplexeur d'adresse 15 dont l'autre entrée reçoit la sortie d'adresse de l'entité fonctionnelle E2. Les fonctions de transformation T1, T2 de l'entité fonctionnelle E1 comportent chacune une sortie reliée au bus de données DTB et une entrée reliée à une sortie de données de l'entité fonctionnelle E1. Les fonctions de transformation inverse I1, I2 de l'entité fonctionnelle E1 comportent chacune une entrée de données reliée au bus de donnée, et une sortie reliée à une entrée de donnée de l'entité fonctionnelle E1. La fonction de transformation T2 de l'entité fonctionnelle E2 comporte une sortie reliée au bus de données DTB et une entrée reliée à une sortie de données de l'entité fonctionnelle E2. La fonction de transformation inverse I2 de l'entité fonctionnelle E2 comporte une entrée de données reliée au bus de donnée, et une sortie reliée à une entrée de données de l'entité fonctionnelle E2. Comme les modes de réalisation précédents, ce mode de réalisation peut aussi être mis en oeuvre sous une forme software, les entrées et sorties étant alors elles-mêmes software.

Il apparaîtra clairement à l'homme de l'art qu'un dispositif selon l'invention est susceptible de divers autres modes de réalisation. Bien que l'on ait décrit dans ce qui précède un dispositif à deux entités, un procédé de partage de mémoire selon l'invention peut être appliqué à des dispositifs ayant un nombre d'entités supérieur à 2 et plusieurs mémoires partagées. La ou les mémoires peuvent être des mémoires volatiles (RAM), des mémoires programmables et effaçables électriquement (EEPROM, Flash), ou autres types de mémoire. De même, bien que l'on ait décrit un découpage de la mémoire en deux ou trois zones seulement, un dispositif selon l'invention peut comporter de multiples zones mémoire privatives et de multiples zones mémoire partagées, et une même entité peut se voir attribuer plusieurs zones mémoire privatives. Un dispositif selon l'invention est également susceptible de diverses applications. Un dispositif selon l'invention peut par exemple former tout ou partie d'un téléphone mobile, d'un décodeur de radio-télévision, d'une carte à puce, etc.

## Revendications

1. Procédé de partage d'une mémoire dans un dispositif (DV1, DV2, DV3) comprenant au moins une mémoire (MEM1) et au moins deux entités fonctionnelles (E1, E2) agencées sur un même support (1) ou dans un même boîtier (2), comprenant les étapes consistant à :

   - configurer une première entité fonctionnelle (E1) pour qu'elle écrive et lise des données dans au moins une première zone (M1) de la mémoire,
   - configurer une deuxième entité fonctionnelle (E2) pour qu'elle écrive et lise des données dans au moins une deuxième zone (M2) de la mémoire disjointe de la première zone mémoire (M1),

   procédé **caractérisé en ce qu'**il comprend les étapes consistant à :

   - attribuer à la première entité fonctionnelle (E1) une première fonction de transformation de données (T1) et une première fonction de transformation inverse de données (I1) permettant de restaurer et/ou de vérifier la validité de données transformées par la première fonction de transformation,
   - attribuer à la deuxième entité fonctionnelle (E2) une deuxième fonction de transformation de données (T2) et une deuxième fonction de transformation inverse de données (I2) permettant de restaurer et/ou de vérifier la validité de données transformées par la deuxième fonction de transformation, la deuxième fonction de transformation inverse (I2) étant incompatible avec la première fonction de transformation (T1) et la première fonction de transformation inverse (I1) incompatible avec la deuxième fonction de transformation (T2),
   - configurer la première entité fonctionnelle (E1) pour qu'elle applique la première fonction de transformation (T1) à une donnée avant de l'écrire dans la première zone mémoire (M1), et applique la première fonction de transformation inverse (I1) à une donnée lue dans la première zone mémoire (M1), et
   - configurer la deuxième entité fonctionnelle (E2) pour qu'elle applique la deuxième fonction de transformation (T2) à une donnée avant de l'écrire dans la deuxième zone mémoire (M2), et applique la deuxième fonction de transformation inverse (I2) à une donnée lue dans la deuxième zone mémoire (M2) par la deuxième entité fonctionnelle (E2).

2. Procédé selon la revendication 1, comprenant une étape consistant à configurer au moins la deuxième fonction de transformation inverse (I2) pour qu'elle fournisse une information d'erreur (ER) lors de la transformation inverse d'une donnée transformée au moyen de la première fonction de transformation (T1).

3. Procédé selon la revendication 2, comprenant une étape consistant à exécuter une action de protection contre une tentative de lecture de données dans la première zone mémoire (M1) par la deuxième entité fonctionnelle (E2) lorsque la deuxième fonction de transformation inverse (I2) fournit l'information d'erreur (ER) après lecture d'une donnée dans la mémoire.

4. Procédé selon l'une des revendications 1 à 3, comprenant les étapes consistant à :

   - configurer la première entité fonctionnelle (E1) pour qu'elle écrive également des données dans une troisième zone mémoire (M3),

- configurer la deuxième entité fonctionnelle (E2) pour qu'elle lise également des données dans la troisième zone mémoire (M3),
- attribuer à la première entité fonctionnelle (E1), en sus de la première fonction de transformation (T1), la deuxième fonction de transformation (T2), sans lui attribuer la deuxième fonction de transformation inverse (I2), et
- configurer la première entité fonctionnelle (E1) pour qu'elle applique la deuxième fonction de transformation (T2) à des données écrites dans la troisième zone mémoire (M3) et destinées à la deuxième entité fonctionnelle (E2, DMA).

5. Procédé selon la revendication 4, comprenant les étapes consistant à :

- configurer la première entité fonctionnelle (E1) pour qu'elle lise également des données dans la troisième zone mémoire (M3),
- configurer la deuxième entité fonctionnelle (E2) pour qu'elle écrive également des données dans la troisième zone mémoire (M3),
- attribuer à la deuxième entité fonctionnelle (E2), en sus de la deuxième fonction de transformation (T2), la première fonction de transformation (T1), sans lui attribuer la première fonction de transformation inverse (I1), et
- configurer la deuxième entité fonctionnelle (E2) pour qu'elle applique la première fonction de transformation (T1) à des données destinées à la première entité fonctionnelle écrites dans la troisième zone mémoire (M3).

6. Procédé selon l'une des revendications 1 à 3, comprenant les étapes consistant à :

- configurer les première et deuxième entités fonctionnelles (E1, E2) pour qu'elles écrivent et lisent des données dans une troisième zone mémoire (M3),
- attribuer à la première entité fonctionnelle (E1, CPU), en sus de la première fonction de transformation (T1) et de la première fonction de transformation inverse (I1), la deuxième fonction de transformation (T2) et la deuxième fonction de transformation inverse
- ne pas attribuer à la deuxième entité fonctionnelle (E2, DMA) la première fonction de transformation (T1) ni la première fonction de transformation inverse (I1),
- configurer la première entité fonctionnelle (E1, CPU) pour qu'elle applique la deuxième fonction de transformation (T2) à des données écrites dans la troisième zone mémoire et destinées à la deuxième entité fonctionnelle (E2, DMA).

7. Procédé selon l'une des revendications 1 à 6, comprenant les étapes consistant à :

- configurer la première entité fonctionnelle pour que la première fonction de transformation (T1) comprenne l'ajout d'un bit de parité (bn) à une donnée à écrire, et pour que la première fonction de transformation inverse (I1) comprenne la vérification qu'une donnée lue dans la mémoire a un bit de parité valide, et
- configurer la deuxième entité fonctionnelle pour que la deuxième fonction de transformation (T2) comprenne l'ajout d'un bit de parité inversé (/bn) à une donnée à écrire, et pour que la deuxième fonction de transformation inverse (I2) comprenne la vérification qu'une donnée lue dans la mémoire a un bit de parité inversé valide.

8. Procédé selon l'une des revendications 1 à 7, comprenant l'étape consistant à configurer au moins une entité fonctionnelle pour que sa fonction de transformation (T1, T2) comprenne une fonction de codage de données (Fc1, Fc2).

9. Procédé selon la revendication 8, comprenant l'étape consistant à prévoir une fonction de codage utilisant l'adresse (AD) d'écriture de la donnée dans la mémoire comme une variable de codage de la donnée.

10. Procédé selon l'une des revendications 1 à 9, comprenant l'étape consistant à configurer au moins une entité fonctionnelle pour que sa fonction de transformation (T1, T2) comprenne une fonction de signature de données (Fs1, Fs2) et sa fonction de transformation inverse (I1, I2) comprenne une fonction de vérification de signature (Fv1, Fv2) fournissant une information d'erreur (ER) lors de la lecture d'une donnée n'ayant pas été transformée au moyen de la fonction de signature (Fs1, Fs2).

11. Procédé selon l'une des revendications 1 à 10, dans lequel au moins l'une des entités fonctionnelles est choisie dans le groupe comprenant les contrôleurs d'accès direct en mémoire (DMA), les processeurs de traitement de signal (CPU), ou des fonctions logicielles exécutées par un ou plusieurs processeurs.

**12.** Dispositif (DV1, DV2, DV3) comprenant au moins une mémoire (MEM1) et au moins deux entités fonctionnelles (E1, E2) agencées sur un même support (1) ou dans un même boîtier (2), dans lequel :

- une première entité fonctionnelle (E1) est configurée pour écrire ou lire des données dans au moins une première zone (M1) de la mémoire,
- une deuxième entité fonctionnelle (E2) est configurée pour écrire ou lire des données dans au moins une deuxième zone (M2) de la mémoire disjointe de la première zone mémoire (M1),

**caractérisé en ce que** :

- la première entité fonctionnelle (E1) comprend une première fonction de transformation de données (T1) et une première fonction de transformation inverse de données (I1) permettant de restaurer et/ou de vérifier la validité de données transformées par la première fonction de transformation,
- la deuxième entité fonctionnelle (E2) comprend une deuxième fonction de transformation de données (T2) et une deuxième fonction de transformation inverse de données (I2) permettant de restaurer et/ou de vérifier la validité de données transformées par la deuxième fonction de transformation, la deuxième fonction de transformation inverse (I2) étant incompatible avec la première fonction de transformation (T1) et la première fonction de transformation inverse (I1) incompatible avec la deuxième fonction de transformation (T2),
- la première entité fonctionnelle (E1) est configurée pour appliquer la première fonction de transformation (T1) à une donnée avant de l'écrire dans la première zone mémoire (M1), et appliquer la première fonction de transformation inverse (I1) à une donnée lue dans la première zone mémoire (M1), et
- la deuxième entité fonctionnelle (E2) est configurée pour appliquer la deuxième fonction de transformation (T2) à une donnée avant de l'écrire dans la deuxième zone mémoire (M2), et appliquer la deuxième fonction de transformation inverse (I2) à une donnée lue dans la deuxième zone mémoire (M2).

**13.** Dispositif selon la revendication 12, dans lequel la deuxième fonction de transformation inverse (I2) est configurée pour fournir une information d'erreur (ER) lors de la transformation inverse d'une donnée transformée au moyen de la première fonction de transformation (T1).

**14.** Dispositif selon la revendication 13, dans lequel la deuxième entité fonctionnelle (E2) est configurée pour exécuter une action de protection contre une tentative de lecture de données dans la première zone mémoire (M1) par la deuxième entité fonctionnelle (E2), lorsque la deuxième fonction de transformation inverse (I2) fournit l'information d'erreur (ER) après lecture d'une donnée dans la mémoire par la deuxième entité fonctionnelle (E2).

**15.** Dispositif (DV2) selon l'une des revendications 12 à 14, dans lequel :

- la première entité fonctionnelle (E1) est configurée pour écrire également des données dans une troisième zone mémoire (M3),
- la deuxième entité fonctionnelle (E2) est configurée pour lire également des données dans la troisième zone mémoire (M3),
- la première entité fonctionnelle (E1) comprend, en sus de la première fonction de transformation (T1), la deuxième fonction de transformation (T2), mais ne comprend pas la deuxième fonction de transformation inverse et
- la première entité fonctionnelle (E1) est configurée pour appliquer la deuxième fonction de transformation (T2) des données écrites dans la troisième zone mémoire (M3) et destinées à la deuxième entité fonctionnelle (E2, DMA).

**16.** Dispositif selon la revendication 15, dans lequel :

- la première entité fonctionnelle (E1) est configurée pour lire également des données dans la troisième zone mémoire (M3),
- la deuxième entité fonctionnelle (E2) est configurée pour écrire également des données dans la troisième zone mémoire (M3),
- la deuxième entité fonctionnelle (E2) comprend, en sus de la deuxième fonction de transformation, la première fonction de transformation (T1), mais ne comprend pas la première fonction de transformation inverse (I1), et
- la deuxième entité fonctionnelle (E2) est configurée pour appliquer la première fonction de transformation (T1) à des données destinées à la première entité fonctionnelle écrites dans la troisième zone mémoire (M3).

**17.** Dispositif (DV3) selon l'une des revendications 12 à 14, dans lequel :

- la première et la deuxième entités fonctionnelles (E1, E2) sont configurées pour écrire et lire des données dans une troisième zone mémoire (M3),
- la première entité fonctionnelle (E1, CPU) comprend, en sus de la première fonction de transformation (T1) et de la première fonction de transformation inverse (I1), la deuxième fonction de transformation (T2) et la deuxième fonction de transformation inverse
- la deuxième entité fonctionnelle (E2, DMA) ne comprend ni la première fonction de transformation (T1) ni la première fonction de transformation inverse (I1), et
- la première entité fonctionnelle (E1, CPU) est configurée pour appliquer la deuxième fonction de transformation (T2) à des données écrites dans la troisième zone mémoire et destinées à la deuxième entité fonctionnelle (E2, DMA).

**18.** Dispositif selon l'une des revendications 12 à 17, dans lequel:

- la première fonction de transformation (T1) comprend l'ajout d'un bit de parité (bn) à une donnée à écrire, et la première fonction de transformation inverse (I1) comprend la vérification qu'une donnée lue dans la mémoire a un bit de parité valide, et
- la deuxième fonction de transformation (T2) comprend l'ajout d'un bit de parité inversé (/bn) à une donnée à écrire, et la deuxième fonction de transformation inverse (I2) comprend la vérification qu'une donnée lue dans la mémoire a un bit de parité inversé valide.

**19.** Dispositif selon l'une des revendications 12 à 18, dans lequel la fonction de transformation (T1, T2) d'au moins une entité fonctionnelle comprend une fonction de codage de données (Fc1, Fc2).

**20.** Dispositif selon la revendication 19, dans lequel la fonction de codage utilise l'adresse (AD) d'écriture de la donnée dans la mémoire comme une variable de codage de la donnée.

**21.** Dispositif selon l'une des revendications 12 à 20, dans lequel la fonction de transformation (T1, T2) d'au moins une entité fonctionnelle comprend une fonction de signature de données (Fs1, Fs2) et la fonction de transformation inverse (I1, I2) correspondante comprend une fonction de vérification de signature (Fv1, Fv2) fournissant une information d'erreur (ER) lors de la lecture d'une donnée n'ayant pas été transformée au moyen de la fonction de signature (Fs1, Fs2).

**22.** Dispositif selon l'une des revendications 12 à 20, dans lequel au moins l'une des entités fonctionnelles est choisie dans le groupe comprenant les contrôleurs d'accès direct en mémoire (DMA), les processeurs de traitement de signal (CPU), ou des fonctions logicielles exécutées par un ou plusieurs processeurs.

**Patentansprüche**

**1.** Verfahren zum gemeinsamen Nutzen eines Speichers in einer Vorrichtung (DV1, DV2, DV3), die mindestens einen Speicher (MEM1) und mindestens zwei Funktionseinheiten (E1, E2) umfasst, die auf demselben Träger (1) oder in demselben Gehäuse (2) angeordnet sind, umfassend die Schritte, die darin bestehen,

- eine erste Funktionseinheit (E1) dafür zu konfigurieren, dass sie Daten in mindestens einen ersten Bereich (M1) des Speichers schreibt und Daten aus diesem ersten Bereich ausliest,
- eine zweite Funktionseinheit (E2) dafür zu konfigurieren, dass sie Daten in mindestens einen zweiten Bereich (M2) des Speichers, der vom ersten Speicherbereich (M1) getrennt ist, schreibt und Daten aus diesem zweiten Bereich ausliest,

**dadurch gekennzeichnet, dass** es die folgenden Schritte umfasst, die darin bestehen,

- der ersten Funktionseinheit (E1) eine erste Daten-Transformationsfunktion (T1) und eine erste Daten-Rücktransformationsfunktion (I1), welche die Wiederherstellung und/oder Überprüfung der Gültigkeit der mittels der ersten Transformationsfunktion transformierten Daten ermöglicht, zuzuordnen,
- der zweiten Funktionseinheit (E2) eine zweite Daten-Transformationsfunktion (T2) und eine zweite Daten-Rücktransformationsfunktion welche die Wiederherstellung und/oder Überprüfung der Gültigkeit der mittels der zweiten Transformationsfunktion transformierten Daten ermöglicht, zuzuordnen, wobei die zweite Rücktransformationsfunktion (I2) mit der ersten Transformationsfunktion (T1) inkompatibel ist und die erste Rücktransformationsfunktion (I1) mit der zweiten Transformationsfunktion (T2) inkompatibel ist,

- die erste Funktionseinheit (E1) dafür zu konfigurieren, dass sie die erste Transformationsfunktion (T1) auf eine Dateneinheit anwendet, bevor sie diese in den ersten Speicherbereich (M1) schreibt, und die erste Rücktransformationsfunktion (I1) auf eine aus dem ersten Speicherbereich (M1) ausgelesene Dateneinheit anwendet,
- die zweite Funktionseinheit (E2) dafür zu konfigurieren, dass sie die zweite Transformationsfunktion (T2) auf eine Dateneinheit anwendet, bevor sie diese in den zweiten Speicherbereich (M2) schreibt, und die zweite Rücktransformationsfunktion (I2) auf eine aus dem zweiten Speicherbereich (M2) ausgelesene Dateneinheit anwendet.

2. Verfahren nach Anspruch 1, umfassend einen Schritt, der darin besteht, mindestens die zweite Rücktransformationsfunktion (I2) dafür zu konfigurieren, dass sie bei der Rücktransformation einer mittels der ersten Transformationsfunktion (T1) transformierten Dateneinheit eine Fehlerinformation (ER) liefert.

3. Verfahren nach Anspruch 2, umfassend einen Schritt, der darin besteht, eine Schutzmaßnahme gegen einen Versuch der zweiten Funktionseinheit (E2), Daten aus dem ersten Speicherbereich (M1) auszulesen, durchzuführen, wenn die zweite Rücktransformationsfunktion (I2) nach einem Auslesen einer Dateneinheit aus dem Speicher die Fehlerinformation (ER) liefert.

4. Verfahren nach einem der Ansprüche 1 bis 3, umfassend die Schritte, die darin bestehen,

- die erste Funktionseinheit (E1) dafür zu konfigurieren, dass sie Daten auch in einen dritten Speicherbereich (M3) schreibt,
- die zweite Funktionseinheit (E2) dafür zu konfigurieren, dass sie Daten auch aus dem dritten Speicherbereich (M3) ausliest,
- der ersten Funktionseinheit (E1) zusätzlich zur ersten Transformationsfunktion (T1) die zweite Transformationsfunktion (T2) zuzuordnen, ohne ihr die zweite Rücktransformationsfunktion (I2) zuzuordnen, und
- die erste Funktionseinheit (E1) dafür zu konfigurieren, dass sie die zweite Transformationsfunktion (T2) auf Daten anwendet, die in den dritten Speicherbereich (M3) geschrieben werden und für die zweite Funktionseinheit (E2, DMA) bestimmt sind.

5. Verfahren nach Anspruch 4, umfassend die Schritte, die darin bestehen,

- die erste Funktionseinheit (E1) dafür zu konfigurieren, dass sie Daten auch aus dem dritten Speicherbereich (M3) ausliest,
- die zweite Funktionseinheit (E2) dafür zu konfigurieren, dass sie Daten auch in den dritten Speicherbereich (M3) schreibt,
- der zweiten Funktionseinheit (E2) zusätzlich zur zweiten Transformationsfunktion (T2) die erste Transformationsfunktion (T1) zuzuordnen, ohne ihr die erste Rücktransformationsfunktion (I1) zuzuordnen, und
- die zweite Funktionseinheit (E2) dafür zu konfigurieren, dass sie die erste Transformationsfunktion (T1) auf für die erste Funktionseinheit bestimmte Daten anwendet, die in den dritten Speicherbereich (M3) geschrieben werden.

6. Verfahren nach einem der Ansprüche 1 bis 3, umfassend die Schritte, die darin bestehen,

- die erste und die zweite Funktionseinheit (E1, E2) dafür zu konfigurieren, dass sie Daten in einen dritten Speicherbereich (M3) schreiben und Daten aus diesem auslesen,
- der ersten Funktionseinheit (E1, CPU) zusätzlich zur ersten Transformationsfunktion (T1) und zur ersten Rücktransformationsfunktion (I1) die zweite Transformationsfunktion (T2) und die zweite Rücktransformationsfunktion (I2) zuzuordnen,
- der zweiten Funktionseinheit (E2, DMA) weder die erste Transformationsfunktion (T1) noch die erste Rücktransformationsfunktion (I1) zuzuordnen,
- die erste Funktionseinheit (E1, CPU) dafür zu konfigurieren, dass sie die zweite Transformationsfunktion (T2) auf Daten anwendet, die in den dritten Speicherbereich geschrieben werden und für die zweite Funktionseinheit (E2, DMA) bestimmt sind.

7. Verfahren nach einem der Ansprüche 1 bis 6, umfassend die Schritte, die darin bestehen,

- die erste Funktionseinheit dafür zu konfigurieren, dass die erste Transformationsfunktion (T1) das Hinzufügen eines Paritätsbits (bn) zu einer zu schreibenden Dateneinheit umfasst, und dafür, dass die erste Rücktransformationsfunktion (I1) das Verifizieren, dass eine aus dem Speicher ausgelesene Dateneinheit ein gültiges Paritätsbit aufweist, umfasst und

- die zweite Funktionseinheit dafür zu konfigurieren, dass die zweite Transformationsfunktion (T2) das Hinzufügen eines invertierten Paritätsbits (/bn) zu einer zu schreibenden Dateneinheit umfasst, und dafür, dass die zweite Rücktransformationsfunktion (I2) das Verifizieren, dass eine aus dem Speicher ausgelesene Dateneinheit ein gültiges invertiertes Paritätsbit aufweist, umfasst.

8. Verfahren nach einem der Ansprüche 1 bis 7, umfassend den Schritt, der darin besteht, mindestens eine Funktionseinheit dafür zu konfigurieren, dass ihre Transformationsfunktion (T1, T2) eine Datencodierfunktion (Fc1, Fc2) umfasst.

9. Verfahren nach Anspruch 8, umfassend den Schritt, der darin besteht, eine Codierfunktion bereitzustellen, welche die Adresse (AD) für das Schreiben der Dateneinheit in den Speicher als Codiervariable der Dateneinheit verwendet.

10. Verfahren nach einem der Ansprüche 1 bis 9, umfassend den Schritt, der darin besteht, mindestens eine Funktionseinheit dafür zu konfigurieren, dass ihre Transformationsfunktion (T1, T2) eine Datensignaturfunktion (Fs1, Fs2) umfasst und ihre Rücktransformationsfunktion (11, 12) eine Signaturprüffunktion (Fv1, Fv2) umfasst, die beim Lesen einer Dateneinheit, die nicht mittels der Signaturfunktion (Fs1, Fs2) transformiert wurde, eine Fehlerinformation (ER) liefert.

11. Verfahren nach einem der Ansprüche 1 bis 10, wobei mindestens eine der Funktionseinheiten aus der Gruppe ausgewählt ist, die Steuerungen des direkten Speicherzugriffs (DMA), Signalverarbeitungsprozessoren (CPU) oder Softwarefunktionen, die von einem oder mehreren Prozessoren ausgeführt werden, umfasst.

12. Vorrichtung (DV1, DV2, DV3), die mindestens einen Speicher (MEM1) und mindestens zwei Funktionseinheiten (E1, E2), die auf demselben Träger (1) oder in demselben Gehäuse (2) angeordnet sind, umfasst, wobei

- eine erste Funktionseinheit (E1) dafür konfiguriert ist, Daten in mindestens einen ersten Bereich (M1) des Speichers zu schreiben oder Daten aus diesem ersten Bereich auszulesen,
- eine zweite Funktionseinheit (E2) dafür konfiguriert ist, Daten in mindestens einen zweiten Bereich (M2) des Speichers, der vom ersten Speicherbereich (M1) getrennt ist, zu schreiben oder Daten aus diesem zweiten Bereich auszulesen,

**dadurch gekennzeichnet, dass**

- die erste Funktionseinheit (E1) eine erste Daten-Transformationsfunktion (T1) und eine erste Daten-Rücktransformationsfunktion (I1), welche die Wiederherstellung und/oder Überprüfung der Gültigkeit von mittels der ersten Transformationsfunktion transformierten Daten ermöglicht, umfasst,
- die zweite Funktionseinheit (E2) eine zweite Daten-Transformationsfunktion (T2) und eine zweite Daten-Rücktransformationsfunktion welche die Wiederherstellung und/oder Überprüfung der Gültigkeit von mittels der zweiten Transformationsfunktion transformierten Daten ermöglicht, umfasst, wobei die zweite Rücktransformationsfunktion (I2) mit der ersten Transformationsfunktion (T1) inkompatibel ist und die erste Rücktransformationsfunktion (I1) mit der zweiten Transformationsfunktion (T2) inkompatibel ist,
- die erste Funktionseinheit (E1) dafür konfiguriert ist, die erste Transformationsfunktion (T1) auf eine Dateneinheit anzuwenden, bevor sie diese in den ersten Speicherbereich (M1) schreibt, und die erste Rücktransformationsfunktion (I1) auf eine aus dem ersten Speicherbereich (M1) ausgelesene Dateneinheit anzuwenden, und
- die zweite Funktionseinheit (E2) dafür konfiguriert ist, die zweite Transformationsfunktion (T2) auf eine Dateneinheit anzuwenden, bevor sie diese in den zweiten Speicherbereich (M2) schreibt, und die zweite Rücktransformationsfunktion (I2) auf eine aus dem zweiten Speicherbereich (M2) ausgelesene Dateneinheit anzuwenden.

13. Vorrichtung nach Anspruch 12, wobei die zweite Rücktransformationsfunktion (I2) dafür konfiguriert ist, bei der Rücktransformation einer mittels der ersten Transformationsfunktion (T1) transformierten Dateneinheit eine Fehlerinformation (ER) zu liefern.

14. Vorrichtung nach Anspruch 13, wobei die zweite Funktionseinheit (E2) dafür konfiguriert ist, eine Schutzmaßnahme gegen einen Versuch der zweiten Funktionseinheit (E2), Daten aus dem ersten Speicherbereich (M1) auszulesen, durchzuführen, wenn die zweite Rücktransformationsfunktion (I2) nach einem durch die zweite Funktionseinheit (E2) erfolgten Auslesen einer Dateneinheit aus dem Speicher die Fehlerinformation (ER) liefert.

15. Vorrichtung (DV2) nach einem der Ansprüche 12 bis 14, wobei

- die erste Funktionseinheit (E1) dafür konfiguriert ist, Daten auch in einen dritten Speicherbereich (M3) zu schreiben,
- die zweite Funktionseinheit (E2) dafür konfiguriert ist, Daten auch aus dem dritten Speicherbereich (M3) auszulesen,
- die erste Funktionseinheit (E1) zusätzlich zur ersten Transformationsfunktion (T1) die zweite Transformationsfunktion (T2) umfasst, jedoch nicht die zweite Rücktransformationsfunktion (I2) umfasst, und
- die erste Funktionseinheit (E1) dafür konfiguriert ist, die zweite Transformationsfunktion (T2) auf Daten anzuwenden, die in den dritten Speicherbereich (M3) geschrieben werden und für die zweite Funktionseinheit (E2, DMA) bestimmt sind.

16. Vorrichtung nach Anspruch 15, wobei

- die erste Funktionseinheit (E1) dafür konfiguriert ist, Daten auch aus dem dritten Speicherbereich (M3) auszulesen,
- die zweite Funktionseinheit (E2) dafür konfiguriert ist, Daten auch in den dritten Speicherbereich (M3) zu schreiben,
- die zweite Funktionseinheit (E2) zusätzlich zur zweiten Transformationsfunktion die erste Transformationsfunktion (T1) umfasst, jedoch nicht die erste Rücktransformationsfunktion (I1) umfasst, und
- die zweite Funktionseinheit (E2) dafür konfiguriert ist, die erste Transformationsfunktion (T1) auf für die erste Funktionseinheit bestimmte Daten anzuwenden, die in den dritten Speicherbereich (M3) geschrieben werden.

17. Vorrichtung (DV3) nach einem der Ansprüche 12 bis 14, wobei

- die erste und die zweite Funktionseinheit (E1, E2) dafür konfiguriert sind, Daten in einen dritten Speicherbereich (M3) zu schreiben und Daten aus diesem auszulesen,
- die erste Funktionseinheit (E1, CPU) zusätzlich zur ersten Transformationsfunktion (T1) und zur ersten Rücktransformationsfunktion (I1) die zweite Transformationsfunktion (T2) und die zweite Rücktransformationsfunktion (I2) umfasst,
- die zweite Funktionseinheit (E2, DMA) weder die erste Transformationsfunktion (T1) noch die erste Rücktransformationsfunktion (I1) umfasst, und
- die erste Funktionseinheit (E1, CPU) dafür konfiguriert ist, die zweite Transformationsfunktion (T2) auf Daten anzuwenden, die in den dritten Speicherbereich geschrieben werden und für die zweite Funktionseinheit (E2, DMA) bestimmt sind.

18. Vorrichtung nach einem der Ansprüche 12 bis 17, wobei

- die erste Transformationsfunktion (T1) das Hinzufügen eines Paritätsbits (bn) zu einer zu schreibenden Dateneinheit umfasst und die erste Rücktransformationsfunktion (I1) das Verifizieren, dass eine aus dem Speicher ausgelesene Dateneinheit ein gültiges Paritätsbit aufweist, umfasst, und
- die zweite Transformationsfunktion (T2) das Hinzufügen eines invertierten Paritätsbits (/bn) zu einer zu schreibenden Dateneinheit umfasst, und die zweite Rücktransformationsfunktion (I2) das Verifizieren, dass eine aus dem Speicher ausgelesene Dateneinheit ein gültiges invertiertes Paritätsbit aufweist, umfasst.

19. Vorrichtung nach einem der Ansprüche 12 bis 18, wobei die Transformationsfunktion (T1, T2) mindestens einer Funktionseinheit eine Datencodierfunktion (Fc1, Fc2) umfasst.

20. Vorrichtung nach Anspruch 19, wobei die Codierfunktion die Adresse (AD) für das Schreiben der Dateneinheit in den Speicher als Codiervariable der Dateneinheit verwendet.

21. Vorrichtung nach einem der Ansprüche 12 bis 20, wobei die Transformationsfunktion (T1, T2) mindestens einer Funktionseinheit eine Datensignaturfunktion (Fs1, Fs2) umfasst und die entsprechende Rücktransformationsfunktion (11, 12) eine Signaturprüffunktion (Fv1, Fv2) umfasst, die beim Lesen einer Dateneinheit, die nicht mittels der Signaturfunktion (Fs1, Fs2) transformiert wurde, eine Fehlerinformation (ER) liefert.

**22.** Vorrichtung nach einem der Ansprüche 12 bis 20, wobei mindestens eine der Funktionseinheiten aus der Gruppe ausgewählt ist, die Steuerungen des direkten Speicherzugriffs (DMA), Signalverarbeitungsprozessoren (CPU) oder Softwarefunktionen, die von einem oder mehreren Prozessoren ausgeführt werden, umfasst.

**Claims**

**1.** A method for sharing a memory in a device (DV1, DV2, DV3) comprising at least one memory (MEM1) and at least two functional entities (E1, E2) arranged on a same support (1) or in a same housing (2), comprising the steps of:

• configuring a first functional entity (E1) so that it writes and reads data in at least a first area (M1) of the memory,
• configuring a second functional entity (E2) so that it writes and reads data in at least a second area (M2) of the memory, disjoint from the first memory area (M1),

**characterized in that** it comprises the steps of:

• assigning to the first functional entity (E1) a first data transformation function (T1) and a first inverse data transformation function (I1) configured to restore and/or verify the validity of data transformed by the first transformation function,
• assigning to the second functional entity a second data transformation function and a second inverse data transformation function configured to restore and/or verify the validity of data transformed by the second transformation function, wherein the second inverse transformation function (12) is incompatible with the first transformation function (T1) and the first inverse transformation function (I1) is incompatible with the second transformation function (T2),
• configuring the first functional entity (E1) so that it applies the first transformation function (T1) to a data word before writing it into the first memory area (M1), and applying the first inverse transformation function (I1) to a data word read in the first memory area (M1), and
• configuring the second functional entity (E2) so that it applies the second transformation function (T2) to a data word before writing it into the second memory area (M2), and applying the second inverse transformation function (12) to a data word read in the second memory area (M2) by the second functional entity (E2).

**2.** The method of claim 1, including a step of configuring at least the second inverse transformation function (12) to provide an error status (ER) when it is applied to data transformed by means of the first transformation function (T1).

**3.** The method of claim 2, comprising a step of performing a protection action against an attempt to read data in the first memory area by the second functional entity when the second inverse transformation function (12) provides the error status (ER) after reading a data word in the memory.

**4.** The method according to any of claims 1 to 3, comprising the steps of:

• configuring the first functional entity (E1) so that it also writes data to a third memory area (M3),
• configuring the second functional entity (E2) so that it also reads data in the third memory area (M3),
• assigning the second transformation function (T2) to the first functional unit (E1), in addition to the first transformation function (T1), without assigning the second inverse transformation function (12) thereto, and
• configuring the first functional entity (E1) to apply the second transformation function (T2) to data written in the third memory area (M3) and intended for the second functional entity (E2, DMA).

**5.** The method of claim 4, comprising the steps of:

• configuring the first functional entity (E1) so that it also reads data in the third memory area (M3),
• configuring the second functional entity (E2) so that it also writes data to the third memory area (M3),
• assigning the first transformation function (T1) to the second functional element (E2), in addition to the second transformation function (T2), without assigning the first inverse transformation function (I1) thereto, and
• configuring the second functional entity (E2) so that it applies the first transformation function (T1) to data intended for the first functional entity written in the third memory area (M3).

**6.** The method according to any of claims 1 to 3, comprising the steps of:

- configuring the first and second functional entities (E1, E2) so that they write and read data in a third memory area (M3),
- assigning to first functional entity (E1, CPU), in addition to the first transformation function (T1) and the first inverse transformation function (I1), the second transformation function (T2) and the second inverse transformation function (12),
- not assigning to the second functional entity (E2, DMA) the first transformation function (T1) or the first inverse transformation function (I1),
- configuring the first functional entity (E1, CPU) to apply the second transformation function (T2) to data written in the third memory area and intended for the second functional entity (E2, DMA).

**7.** The method of any of claims 1 to 6, comprising the steps of:

- configuring the first functional entity so that the first transformation function (T1) comprises adding a parity bit (bn) to a data word to be written, and the first inverse transformation function (I1) verifies that a data word read from the memory has a valid parity bit, and
- configuring the second functional entity so that the second transformation function (T2) comprises adding an inverse parity bit (/bn) to a data word to be written, and the second inverse transformation function (12) verifies that a data word read from the memory has a valid inverse parity bit.

**8.** The method of any of claims 1 to 7, comprising the step of configuring at least one functional entity so that its transformation function (T1, T2) includes a data encoding function (Fc1, Fc2).

**9.** The method of claim 8, including the step of providing an encoding function using the address (AD) used for writing the data into the memory as a data encoding variable.

**10.** The method of any of claims 1 to 9, comprising the step of configuring at least one functional entity so that its transformation function (T1, T2) includes a data signature function (Fs1, Fs2) and its inverse transformation function (I1, 12) includes a signature verification function (Fv1, Fv2) providing an error status (ER) upon reading data that has not been transformed by means of the signature function (Fs1, Fs2).

**11.** The method of any of claims 1 to 10, wherein at least one of the functional entities is selected from the group consisting of direct memory access controllers (DMA), signal processors (CPUs), or software functions executed by one or more processors.

**12.** A device (DV1, DV2, DV3) comprising at least one memory (MEM1) and at least two functional entities (E1, E2) arranged on a same support (1) or in a same housing (2), wherein:

- a first functional entity (E1) is configured to write or read data in at least a first area (M1) of the memory,
- a second functional entity (E2) is configured to write or read data in at least a second area (M2) of the memory, disjoint from the first memory area (M1),

**characterized in that**:

- the first functional entity (E1) includes a first data transformation function (T1) and a first inverse data transformation function (I1) for restoring and/or verifying the validity of data transformed by the first transformation function,
- the second functional entity (E2) includes a second data transformation function (T2) and a second inverse data transformation function (12) for restoring and/or verifying the validity of data transformed by the second transformation function, wherein the second inverse transformation function (12) is incompatible with the first transformation function (T1) and the first inverse transformation function (I1) is incompatible with the second transformation function (T2),
- the first functional entity (E1) is configured to apply the first transformation function (T1) to a data word before writing it into the first memory area (M 1), and applying the first inverse transformation function (I1) to data read in the first memory area (M1), and
- the second functional entity (E2) is configured to apply the second transformation function (T2) to a data word before writing it into the second memory area (M2), and applying the second inverse transformation function (12) to a data read in the second memory area (M2).

13. The device of claim 12, wherein the second inverse transformation function (12) is configured to provide an error status (ER) during the inverse transformation of data transformed by the first transformation function (T1).

14. The device of claim 13, wherein the second functional entity (E2) is configured to perform a protection action against an attempt to read data in the first memory area (M1) by the second functional entity (E2) when the second inverse transformation function (12) provides the error status (ER) after reading data in the memory by the second functional entity (E2).

15. The device (DV2) of any of claims 12 to 14, wherein:

   • the first functional entity (E1) is configured to also write data into a third memory area (M3),
   • the second functional entity (E2) is configured to also read data in the third memory area (M3),
   • the first functional entity (E1) includes, in addition to the first transformation function (T1), the second transformation function (T2), but does not include the second inverse transformation function (12), and
   • the first functional entity (E1) is configured to apply the second transformation function (T2) to the data written in the third memory area (M3) and intended for the second functional entity (E2, DMA).

16. The device of claim 15, wherein:

   • the first functional entity (E1) is configured to also read data in the third memory area (M3),
   • the second functional entity (E2) is configured to also write data into the third memory area (M3),
   • the second functional entity (E2) includes, in addition to the second transformation function, the first transformation function (T1), but does not include the first inverse transformation function (I1), and
   • the second functional entity (E2) is configured to apply the first transformation function (T1) to data intended for the first functional entity written in the third memory area (M3).

17. The device (DV3) of any of claims 12 to 14, wherein:

   • the first and second functional entities (E1, E2) are configured to write and read data in a third memory area (M3),
   • the first functional entity (E1, CPU) includes, in addition to the first transformation function (T1) and the first inverse transformation function (I1), the second transformation function (T2) and the second inverse transformation function (12),
   • the second functional entity (E2, DMA) includes neither the first transformation function (T1) nor the first inverse transformation function (I1), and
   • the first functional entity (E1, CPU) is configured to apply the second transformation function (T2) to data written in the third memory area and intended for the second functional entity (E2, DMA).

18. The device of any of claims 12 to 17, wherein:

   • the first transformation function (T1) includes adding a parity bit (bn) to a data word to be written, and the first inverse transformation function (I1) includes verifying that a data word read from the memory has a valid parity bit, and
   • the second transformation function (T2) includes adding an inverse parity bit (/bn) to a data word to be written, and the second inverse transformation function (12) includes verifying that a data word read in the memory has a valid inverse parity bit.

19. The device of any of claims 12 to 18, wherein the transformation function (T1, T2) of at least one functional entity includes a data encoding function (Fc1, Fc2).

20. The device of claim 19, wherein the encoding function uses the address (AD) for writing the data into the memory as a variable for encoding the data.

21. The device of any of claims 12 to 20, wherein the transformation function (T1, T2) of at least one functional entity includes a data signature function (Fs1, Fs2) and the inverse transformation function (I1, 12) includes a signature verification function (Fv1, Fv2) providing an error status (ER) when reading data that has not been transformed by the signature function (Fs1, Fs2).

22. The device of any of claims 12 to 20, wherein at least one of the functional entities is selected from the group consisting of direct memory access controllers (DMA), signal processors (CPUs), or software functions executed by one or more processors.

**Fig. 1**

**Fig. 2**

**Fig. 3A**

**Fig. 3B**

**Fig. 4**

**Fig. 5**

**Fig. 6**

**Fig. 7**

**Fig. 8**

**EP 3 283 968 B1**

## RÉFÉRENCES CITÉES DANS LA DESCRIPTION

### Documents brevets cités dans la description

- FR 2989801 A1